# EUROPEAN PATENT APPLICATION

(11) **EP 4 763 601 A1**
(43) Date of publication of application: **24.06.2026**
(21) Application number: 24221801.4
(22) Date of filing: 19.12.2024
(51) Int. Cl.: B60L 58/18, B60L 58/21, H02J 1/08, H02J 7/00, H02J 7/34, H02M 1/00, H02M 3/00, H02M 3/158

(54) **BATTERY SYSTEM WITH MULTIPLE OUTPUT VOLTAGE LEVELS**

(71) Applicant: Volvo Penta Corporation, 405 08 Göteborg (SE)
(72) Inventor: Kersten, Anton, 433 42 Partille (SE); Bhumireddy, Amaranath Reddy, 426 50 Göteborg (SE); Skoglund, Martin, 418 71 Göteborg (SE); Mirbagheri, Mina, 417 60 Göteborg (SE); Vekas, Kristian, 429 34 Kullavik (SE); Carlsson, Lars-Gunnar, 423 39 Torslanda (SE)
(74) Representative: Valea AB

(57) **Abstract**

A battery system (300) for providing multiple output voltage levels (VI, V2, V3). The battery system (300) comprises at least one battery pack (310) and a direct current to direct current (DC/DC) converter (320). The first voltage level (V1) is the DC/DC converter (320) output voltage level, the second voltage level (V2) is the battery pack (310) output voltage level, and the third voltage level (V3) is a sum of the battery pack (310) output voltage and DC/DC converter (320) output voltage.

## Description

### TECHNICAL FIELD

The disclosure relates generally to battery system. In particular aspects, the disclosure relates to a battery system with a direct current to direct current (DC/DC) converter for providing multiple voltage levels. The disclosure can be applied to any power system and vehicles using an electrical energy storage system, such as heavy-duty vehicles, e.g. trucks, buses, and construction equipment, among other vehicle types. Although the disclosure may be described with respect to a particular vehicle, the disclosure is not restricted to any particular vehicle.

### BACKGROUND

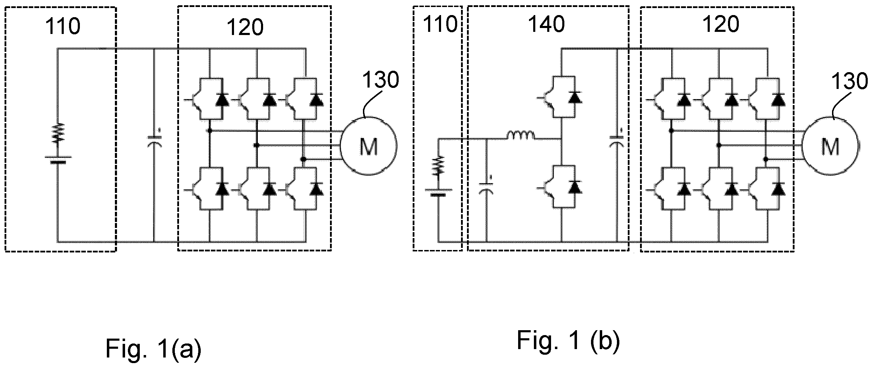

A Battery Electric Vehicle (BEV) powertrain is a system that propels an electric motor in a vehicle using energy stored in a battery. **Fig.1 (a)** shows a conventional BEV powertrain comprising a battery pack **110,** an inverter **120** and an electric motor **130.** To increase the drive cycle efficiency of an electric vehicle, a boost DC/DC converter may be used to increase DC link voltage. **Fig.1 (b)** shows a BEV powertrain with a boost DC/DC converter **140.** However, the boost DC/DC converter 140 must be designed for full active power needed by the inverter 120 and the electric motor 130 plus their combined losses. This makes the boost DC/DC converter 140 bulky and expensive when used for electric drives, Battery Energy Storage System (BESS) or similar applications. The battery pack 110 is connected in parallel with the boost DC/DC converter 140 which is connected to a traction voltage bus. Nowadays, a BEV powertrain system usually comprises multiple battery packs e.g. 6 or 8 battery packs. Connecting multiple battery packs to a traction voltage bus may cause inrush and equalization currents. A common traction voltage bus also makes it difficult to control the current of individual battery pack and an Original Equipment Manufacturer (OEM) may violate battery limits such as State of Charge (SOC) range or power capability of a battery pack provided by other producers than the OEM itself. A more compact and efficient battery system is needed for electric drives, BESS or similar applications.

### SUMMARY

According to a first aspect of the disclosure, a battery system having a first, a second and third output terminals for providing multiple output voltage levels is provided. The battery system comprises at least one battery pack having a first terminal and a second terminal and a direct current to direct current (DC/DC) converter having a first input terminal, a second input terminal, a first output terminal and a second output terminal. The first input terminal of the DC/DC converter is connected to the first terminal of the battery pack. The second input terminal of the DC/DC converter is connected to the second terminal of the battery pack. The first output terminal of the DC/DC converter is connected to the first output terminal of the battery system, the second output terminal of the DC/DC converter is connected to the first terminal of the battery pack and to the second output terminal of the battery system. The second terminal of the battery pack is connected to the third output terminal of the battery system. The first voltage level is the DC/DC converter output voltage level, the second voltage level is the battery pack output voltage level, and the third voltage level is a sum of the battery pack output voltage and DC/DC converter output voltage.

The first aspect of the disclosure may seek to provide a battery system with improved efficiency while using less bulky and expensive components compared to the existing solution. A technical benefit may include providing a compact, flexible and configurable battery system with multiple output voltage levels and increased power density and efficiency, making controlling of reactive power for a grid connected inverter easy, eliminating any inrush and equalization currents when connecting several batteries to the same voltage bus.

Optionally in some examples, including in at least one preferred example, the DC/DC converter may be configured to provide a fraction of a full power needed by a load connected between the first and third output terminals of the battery system 300. A technical benefit may include providing a less bulky and expensive DC/DC converter thanks to the DC/DC converter which only needs to provide a fraction of the full power, resulting in a compact battery system with increased power density and efficiency compared to a DC/DC converter configured to provide the full power needed by a load.

Optionally in some examples, including in at least one preferred example, the DC/DC converter may be a dual active bridge converter. A technical benefit may include providing a DC/DC converter which can act as a buck or boost converter with galvanic isolation.

Optionally in some examples, including in at least one preferred example, the DC/DC converter may be an inductor-inductor-capacitor resonant converter. A technical benefit may include providing different types of DC/DC converters for different applications and requirements.

Optionally in some examples, including in at least one preferred example, the DC/DC converter may be any one of a buck DC/DC converter, a boost DC/DC converter, or a DC/DC converter with any type of conversion ratio. A technical benefit may include providing different types of DC/DC converters for different applications and requirements.

Optionally in some examples, including in at least one preferred example, the DC/DC converter may be a unidirectional or bidirectional DC/DC converter. A technical benefit may include providing different types of DC/DC converters for different applications and requirements.

Optionally in some examples, including in at least one preferred example, the DC/DC converter may be configured to provide galvanic isolation between the input and output of the battery system.

Optionally in some examples, including in at least one preferred example, the DC/DC converter output voltage may be configurable such that the third voltage level is between the battery pack output voltage and a maximum output voltage of the DC/DC converter. A technical benefit may include providing a flexible and configurable battery system with various output voltage levels depending on various voltage level requirements of loads.

Optionally in some examples, including in at least one preferred example, the battery system may be implemented in a renewable energy system, or a high-voltage direct current, HVDC, transmission system, or a battery energy storage system. A technical benefit may include providing a compact, efficient, flexible and configurable battery system for various power systems.

Optionally in some examples, including in at least one preferred example, the battery system may be implemented in a motor drive system of a vehicle. A technical benefit may include providing a battery system which is more compact, cheap and efficient resulting in a more power efficient and less expensive vehicle compared to the existing solutions.

According to a second aspect of the disclosure, a vehicle comprises a battery system of the first aspect is provided. The battery system may be implemented in a motor drive system of the vehicle. The second aspect of the disclosure may seek to provide a vehicle which is more power efficient and less expensive compared to the existing solutions. A technical benefit may include providing a more power efficient and less expensive vehicle thanks to the battery system which is more compact, cheap, efficient and flexible.

According to a third aspect of the disclosure, a method for providing multiple output voltage levels in a battery system is provided. The method comprises providing a battery pack having a first terminal and a second terminal; providing a DC/DC converter having a first input terminal, a second input terminal, a first output terminal and a second output terminal; providing a connection between the first input terminal of the DC/DC converter and the first terminal of the battery pack; providing a connection between the second input terminal of the DC/DC converter and the second terminal of the battery pack; providing a connection between the first output terminal of the DC/DC converter and a first output terminal of the battery system; providing a connection between the second output terminal of the DC/DC converter, the first terminal of the battery pack and a second output terminal of the battery system; providing a connection between the second terminal of the battery pack and a third output terminal of the battery system; providing a first voltage level between the first and second output terminals of the battery system, which is the DC/DC converter output voltage level; providing a second voltage level between the second and third output terminals of the battery system, which is the battery pack output voltage; and providing a third voltage level between the first and third output terminals of the battery system, which is a sum of the battery pack output voltage and DC/DC converter output voltage.

The third aspect of the disclosure may seek to provide multiple output voltage levels in a battery system which is more compact, cheap, efficient and flexible. A technical benefit may include providing multiple output voltage levels in a battery system which is more compact, cheap, efficient and flexible compared to the existing solution, enabling easy controlling of reactive power for a grid connected inverter, eliminating any inrush and equalization currents when connecting several batteries to the same voltage bus.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIGs. 1 (a) and (b) are exemplary powertrains according to some prior art examples.
FIG. 2 is an equivalent circuit representation of a battery with a DC/DC converter according to some prior art examples.
FIG. 3 is an equivalent circuit representation of a battery with a DC/DC converter according to an example.
FIG. 4 is an exemplary battery system with a dual active bridge converter according to some examples.
FIG. 5 is an exemplary battery system with an inductor-inductor-capacitor resonant converter according to some examples.
FIG. 6 is a flow chart showing a method for providing multiple output voltage levels in a battery system according to an example.
FIG. 7 is an exemplary vehicle comprising a battery system according to an example.

### DETAILED DESCRIPTION

The detailed description set forth below provides information and examples of the disclosed technology with sufficient detail to enable those skilled in the art to practice the disclosure.

When operating a BESS in a grid tied mode, the available DC link must be higher than the peak of the line-to-line voltage of the grid to control also the reactive power flow and not just the active power flow. For the shown topology as in Fig. 1 (b), the boost converter 140 must be designed for the **full** active power as the main inverter 140 plus its losses. This makes the boost stage bulky and expensive.

When multiple batteries or battery cells, battery modules or battery packs are dynamically connected in parallel, there is an equalization current triggered. This current is dependent on the voltage difference and the internal impedance of the batteries. This current increases with the number of batteries, and it cannot be avoided due to measurement accuracies and practical purposes, such as availability of power. The equalization current superimposes the load current and, thus, reduces the utilizable current limit. Furthermore, the equalization current comes with ohmic losses, which reduces energy efficiency. Boost or buck converters may be used to control such inrush currents, but these must be designed for the **full** active power of a battery pack. This also makes the boost or buck stage bulky and expensive. For example, in a BEV powertrain, there may be 32 batteries, and all should be connected to the same traction voltage bus. Several busbars with intermediate stages may be used. A high voltage level, e.g. 1500V, may be desired to reduce cable conductor areas for long cables. Such high voltage level setups may also be desired for inverters because high voltage inverters have a reduced cost per kW. However, currents of the individual batteries at each traction voltage bus cannot be controlled. Batteries can only be disconnected in case of high battery temperature.

BESS components are usually manufactured by other producers and provided to OEMs which provide the main inverter which is connected to a grid. The control unit in the BESS component communicates the battery limits like SOC and power abilities to the OEM, but the OEM may violate these. The way to solve this problem is to disconnect the battery via contactors, which may destroy a service box already after several maneuvers.

To provide a high traction voltage without increasing the power ability of a battery pack or the existing number of the battery packs, it is proposed to rearrange the connection of a DC/DC converter and a battery pack.

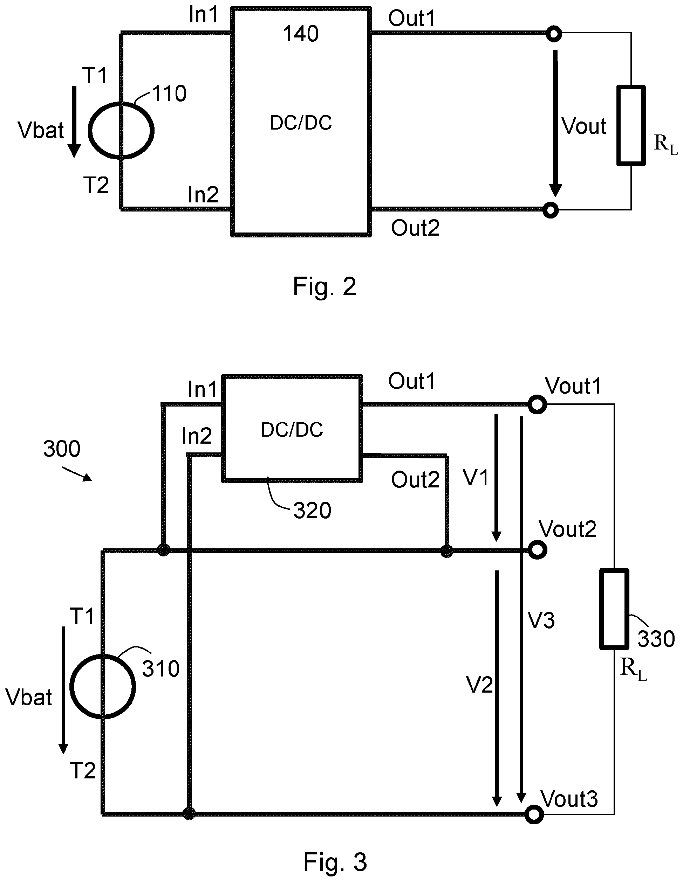

**Fig. 2** depicts an equivalent circuit representation of the DC/DC converter 140 and battery 110 as shown in Fig. 1(b) to simply show how the DC/DC converter 140 is connected to the battery 110 before rearranging the connection of the DC/DC converter and battery pack. As can be seen, the DC/DC converter 140 is connected in parallel to the battery 110. That is the input terminals **In1** and **In2** of the DC/DC converter 140 are connected to the first and second terminals **T1, T2** of the battery 110, respectively, and the output terminals **Out1** and **Out2** of the DC/DC converter 140 are connected to a load **R_{L}** which represents an inverter or any other loads. This connection of the DC/DC converter and battery pack can only provide one voltage level **Vout** which is the output voltage of the DC/DC converter 140 and the DC/DC converter 140 must be designed with a full power needed by the load R_{L}.

**Fig. 3** depicts an equivalent circuit representation of a battery system **300** comprising a battery pack **310** and a DC/DC converter **320,** where the connection of the DC/DC converter 320 to the battery pack 310 is rearranged. The battery system 300 has a first, a second and third output terminals **Vout1, Vout2, Vout3** for providing multilevel output voltages **V1, V2, V3.** The battery pack 310 has a first terminal **T1** and a second terminal **T2.** The DC/DC converter 320 has a first input terminal **In1,** a second input terminal **In2,** a first output terminal **Out1** and a second output terminal **Out2.** The first input terminal In1 of the DC/DC converter 320 is connected to the first terminal T1 of the battery pack 310, the second input terminal In2 of the DC/DC converter 320 is connected to the second terminal T2 of the battery pack 310, the first output terminal Out1 of the DC/DC converter 320 is connected to the first output terminal Vout1 of the battery system 300, the second output terminal Out2 of the DC/DC converter 320 is connected to the first terminal T1 of the battery pack 310 and to the second output terminal Vout2 of the battery system 300, the second terminal T2 of the battery pack 310 is connected to the third output terminal Vout3 of the battery system 300.

In other words, the connection of the DC/DC converter 320 to the battery pack 310 is rearranged such that the input terminals In1, In2 of the DC/DC converter 320 are connected in parallel with the first and second terminals T1, T2 of the battery pack 310 and the output terminals Out1, Out2 of the DC/DC converter 320 are connected in series with the first and second terminals T1, T2 of the battery pack 310. The battery system 300 thus can provide multiple output voltage levels V1, V2, V3. The first voltage level V1 is the DC/DC converter 320 output voltage level V_{DC/DC}, i.e. V1=V_{DC/DC}, the second voltage level V2 is the battery pack 310 output voltage level Vbat, i.e. V2=Vbat, and the third voltage level V3 is a sum of the battery pack 310 output voltage and DC/DC converter 320 output voltage, i.e. V3= V_{DC/DC}+Vbat.

When a load R_{L} **330** is connected between the first and third output terminals Vout1, Vout3 of the battery system 300, the DC/DC converter 320 only needs to provide a fraction of the full power needed by the load R_{L} 330. That is the battery pack 310 and DC/DC converter 320 will join together and provide the full power needed by the load R_{L} 330.

For different applications and requirements, different types of DC/DC converters may be used. The DC/DC converter 320 may be any one of a buck DC/DC converter, a boost DC/DC converter, or a DC/DC converter with any type of conversion ratio.

The DC/DC converter 320 may be a unidirectional or bidirectional DC/DC converter.

The DC/DC converter 320 may be configured to provide galvanic isolation between the input and output of the battery system 300.

The DC/DC converter 320 output voltage may be configurable such that the third voltage level V3 is between the battery pack 310 output voltage and a maximum output voltage of the DC/DC converter 320.

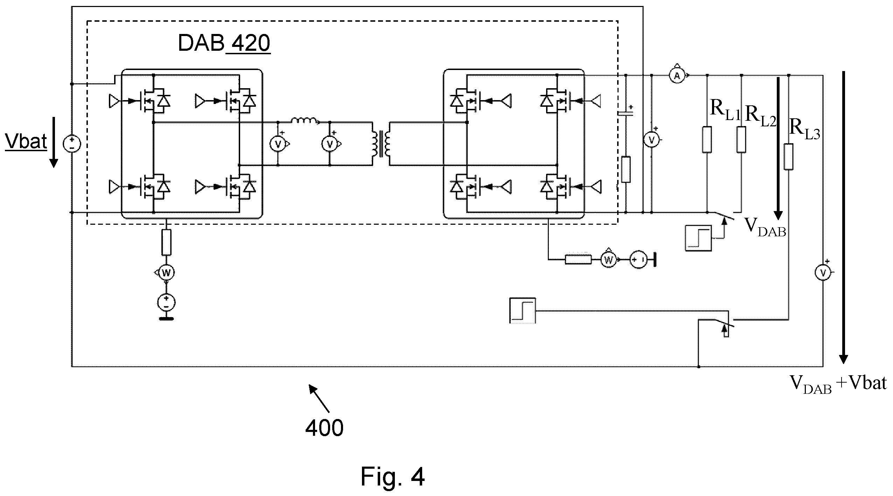

For example, the DC/DC converter 320 may be a Dual Active Bridge (DAB) converter. The DAB converter may act as a buck or boost converter with galvanic isolation. **Fig.4** shows a schematic block diagram of a battery system **400** with a DAB converter **420.** There may be different loads connected to the battery system 400 depending on voltage levels required by the loads. For example, a first load R_{L1} may be connected to the output of the DAB converter 420 to get power with a voltage level of V_{DAB}, a second load R_{L2} may be switched in and connected to the output of the DAB converter 420 to get power with a voltage level of V_{DAB}. To get power with a joint output voltage level corresponds to the sum of both the DAB converter 420 and battery pack, a third load R_{L3} may be switched in and connected between the output of the DAB converter 420 and the output of the battery pack to get power with a voltage level of V_{DAB}+Vbat. In this way, for example, one can turn a 750 Volt battery into e.g. a 1500V battery, whereas the DAB converter 420 only needs to provide half of the full power needed by the third load R_{L3}.

The DAB converter 420 may be configurable with any type of conversion ratio to have various output voltage levels. That is the joint voltage V_{DAB}+Vbat from the battery system 400 may be adjusted or configured to any voltage level between the battery voltage level, e.g. 750V, and the max voltage level of the DAB converter 420. However, the DAB converter 420 only needs to provide a portion of the full power needed by a load according to a ratio V_{DAB}/(V_{DAB}+Vbat).

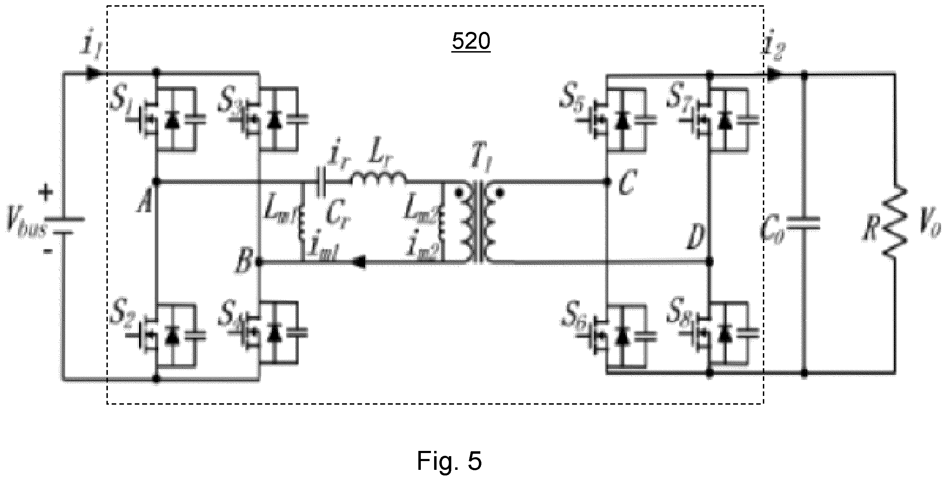

The DC/DC converter 320 may be an inductor-inductor-capacitor (LLC) resonant converter **520,** as shown in **Fig. 5****.** The LLC resonant converter 520 can galvanically isolate output from input. The LLC resonant converter 520 is implemented by transistors for bidirectional operation. The secondary side of the DC/DC 520, i.e. load side, may also contain only diodes for unidirectional operation. If the polarity of the secondary side is reversed, the LLC resonant converter 520 may act as a buck instead of a boost converter.

The DC/DC converter 320, 420, 520 output voltage may be boosted which increases efficiency and helps to control the reactive power for a grid connected inverter. The boost converter needs to be designed only for a fraction of the full power, corresponding to the ratio of the boosted voltage relative to the total output voltage, this makes the system more compact and efficient compared to the boost converter delivering full power.

The battery system 300, 400 may comprise multiple batteries or battery cells, battery modules or battery packs. When connecting several batteries or battery packs to the same voltage bus, the boost DC/DC converter can be used to precondition the voltage of the battery to be attached or the already attached batteries to eliminate any inrush and equalization currents. It is sufficient to connect only one DC/DC converter to multiple batteries or battery cells, battery modules or battery packs. However, multiple DC/DCs may be used for each battery pack.

The suggested boost DC/DC converter 320, 420, 520 can be used to control the full power of the battery pack and, thus, it may be used to protect the SOC range and power limits of the battery pack.

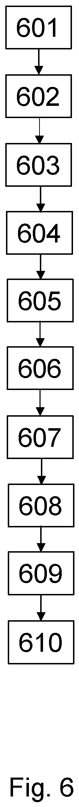

A method for providing multiple output voltage levels in a battery system will be described with reference to **Fig.6****.** The method comprises the following steps which may be performed in any suitable order or simultaneously.

**601:** providing a battery pack 310 having a first terminal T1 and a second terminal T2.

**602:** providing a DC/DC converter 320 having a first input terminal In1, a second input terminal In2, a first output terminal Out1 and a second output terminal Out2.

**603:** providing a connection between the first input terminal In1 of the DC/DC converter 320 and the first terminal T1 of the battery pack 310.

**604:** providing a connection between the second input terminal In2 of the DC/DC converter 320 and the second terminal T2 of the battery pack 310.

**605:** providing a connection between the first output terminal Out1 of the DC/DC converter 320 and a first output terminal Vout1 of the battery system 300.

**606:** providing a connection between the second output terminal Out2 of the DC/DC converter 320, the first terminal T1 of the battery pack 310 and a second output terminal Vout2 of the battery system 300.

**607:** providing a connection between the second terminal T2 of the battery pack 310 and a third output terminal Vout3 of the battery system 300.

**608:** providing a first voltage level V1 between the first and second output terminals Vout1, Vout2 of the battery system 300, which is the DC/DC converter 320 output voltage level.

**609:** providing a second voltage level V2 between the second and third output terminals Vout2, Vout3 of the battery system 300, which is the battery pack 310 output voltage level.

**610:** providing a third voltage level V3 between the first and third output terminals Vout1, Vout3 of the battery system 300, which is a sum of the battery pack 310 output voltage and DC/DC converter 320 output voltage.

The battery system 300, 400, 500 may be implemented in any power system, such as a renewable energy system, a motor drive system, a high-voltage direct current (HVDC) transmission system, or a battery energy storage system.

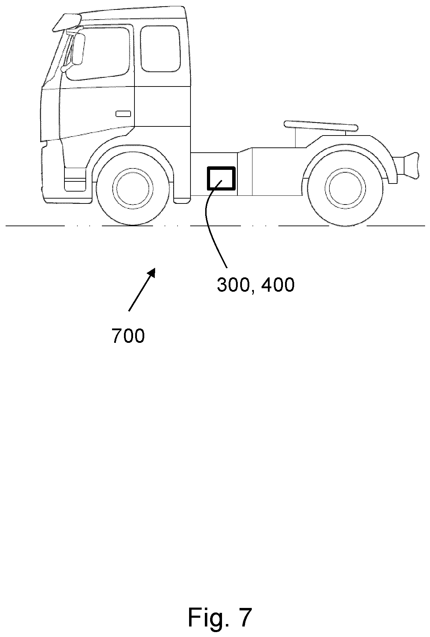

The battery system 300, 400, 500 may be implemented in a motor drive system of a vehicle. **Fig. 7** shows an exemplary vehicle **700** in which the battery system 300, 400, 500 may be implemented. The vehicle 700 comprises a battery system 300, 400, 500 as described above. The vehicle 700 may be a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle 700 may be a truck for towing one or more trailers (not shown). It shall however be understood that the vehicle may be any other type of vehicle, such as another type of truck, a bus, a passenger car, and construction equipment, such as an excavator, a wheel loader, etc. The vehicle 700 may be operated by a user (not shown) and/or be at least partly automatically driven, i.e., it may be a vehicle comprising autonomous driving capabilities. The vehicle 700 may be a fully electric vehicle or a hybrid vehicle or a vehicle driven only by a combustion engine. As such, the vehicle 700 may comprise one or more electric motors/generators and/or an internal combustion engine for driving the vehicle 700.

The term vehicle will be used herein when referring to any of the above types of vehicles.

**Some examples:**
Example 1: A battery system (300) having a first, a second and third output terminals (Vout1, Vout2, Vout3) for providing multiple output voltage levels (V1, V2, V3), wherein the battery system (300) comprises:
   at least one battery pack (310) having a first terminal (T1) and a second terminal (T2);
   a direct current to direct current, DC/DC, converter (320) having a first input terminal (In1), a second input terminal (In2), a first output terminal (Out1) and a second output terminal (Out2); and wherein
   the first input terminal (In1) of the DC/DC converter (320) is connected to the first terminal (T 1) of the battery pack (310),
   the second input terminal (In2) of the DC/DC converter (320) is connected to the second terminal (T2) of the battery pack (310),
   the first output terminal (Out1) of the DC/DC converter (320) is connected to the first output terminal (Vout1) of the battery system (300),
   the second output terminal (Out2) of the DC/DC converter (320) is connected to the first terminal (T1) of the battery pack (310) and to the second output terminal (Vout2) of the battery system (300),
   the second terminal (T2) of the battery pack (310) is connected to the third output terminal (Vout3) of the battery system (300); and wherein
   the first voltage level (V1) is the DC/DC converter (320) output voltage level,
   the second voltage level (V2) is the battery pack (310) output voltage level, and
   the third voltage level (V3) is a sum of the battery pack (310) output voltage and DC/DC converter (320) output voltage.
Example 2: The battery system (300) according to Example 1, wherein the DC/DC converter (320) is configured to provide a fraction of a full power needed by a load (330) connected between the first and third output terminals (Vout1, Vout2) of the battery system (300).
Example 3: The battery system (300) according to any one of Examples 1-2, wherein the DC/DC converter (320) is a dual active bridge converter (400).
Example 4: The battery system (300) according to any one of Examples 1-2, wherein the DC/DC converter (320) is an inductor-inductor-capacitor resonant converter (500).
Example 5: The battery system (300) according to any one of Examples 1-4, wherein the DC/DC converter (320) is any one of a buck DC/DC converter, a boost DC/DC converter, or a DC/DC converter with any type of conversion ratio.
Example 6: The battery system (300) according to any one of Examples 1-5, wherein the DC/DC converter (320) is a unidirectional or bidirectional DC/DC converter.
Example 7: The battery system (300) according to any one of Examples 1-6, wherein the DC/DC converter (320) is configured to provide galvanic isolation between the input and output of the battery system (300).
Example 8: The battery system (300) according to any one of Examples 1-7, wherein the DC/DC converter (320) output voltage is configurable such that the third voltage level (V3) is between the battery pack (310) output voltage and a maximum output voltage of the DC/DC converter (320).
Example 9: The battery system (300) according to any one of Examples 1-8, wherein the battery system (300) is implemented in a renewable energy system, or a high-voltage direct current, HVDC, transmission system, or a battery energy storage system.
Example 10: The battery system (300) according to any one of Examples 1-8, wherein the battery system (300) is implemented in a motor drive system of a vehicle (700).
Example 11: A vehicle (700) comprises a battery system (300) according to any one of Examples 1-8.
Example 12: A method for providing multiple output voltage levels (V1, V2, V3) in a battery system (300) comprising:
   providing (601) a battery pack (310) having a first terminal (T1) and a second terminal (T2);
   providing (602) a direct current to direct current, DC/DC, converter (320) having a first input terminal (In1), a second input terminal (In2), a first output terminal (Out1) and a second output terminal (Out2);
   providing (603) a connection between the first input terminal (In1) of the DC/DC converter (320) and the first terminal (T1) of the battery pack (310),
   providing (604) a connection between the second input terminal (In2) of the DC/DC converter (320) and the second terminal (T2) of the battery pack (310),
   providing (605) a connection between the first output terminal (Out1) of the DC/DC converter (320) and a first output terminal (Vout1) of the battery system (300),
   providing (606) a connection between the second output terminal (Out2) of the DC/DC converter (320), the first terminal (T1) of the battery pack (310) and a second output terminal (Vout2) of the battery system (300),
   providing (607) a connection between the second terminal (T2) of the battery pack (310) and a third output terminal (Vout3) of the battery system (300); and
   providing (608) a first voltage level (V1) between the first and second output terminals (Vout1, Vout2) of the battery system (300), which is the DC/DC converter (320) output voltage level,
   providing (609) a second voltage level (V2) between the second and third output terminals (Vout2, Vout3) of the battery system (300), which is the battery pack (310) output voltage level,
   providing (610) a third voltage level (V3) between the first and third output terminals (Vout1, Vout3) of the battery system (300), which is a sum of the battery pack (310) output voltage and DC/DC converter (320) output voltage.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery system (300, 400) having a first, a second and third output terminals (Vout1, Vout2, Vout3) for providing multiple output voltage levels (V1, V2, V3), wherein the battery system (300, 400) comprises:
at least one battery pack (310) having a first terminal (T1) and a second terminal (T2);
a direct current to direct current, DC/DC, converter (320, 420, 520) having a first input terminal (In1), a second input terminal (In2), a first output terminal (Out1) and a second output terminal (Out2); and wherein
the first input terminal (In1) of the DC/DC converter (320, 420, 520) is connected to the first terminal (T 1) of the battery pack (310),
the second input terminal (In2) of the DC/DC converter (320, 420, 520) is connected to the second terminal (T2) of the battery pack (310),
the first output terminal (Out1) of the DC/DC converter (320, 420, 520) is connected to the first output terminal (Vout1) of the battery system (300, 400),
the second output terminal (Out2) of the DC/DC converter (320, 420, 520) is connected to the first terminal (T 1) of the battery pack (310) and to the second output terminal (Vout2) of the battery system (300, 400),
the second terminal (T2) of the battery pack (310) is connected to the third output terminal (Vout3) of the battery system (300); and wherein
the first voltage level (V1) is the DC/DC converter (320, 420, 520) output voltage level,
the second voltage level (V2) is the battery pack (310) output voltage level, and
the third voltage level (V3) is a sum of the battery pack (310) output voltage and DC/DC converter (320, 420, 520) output voltage.

2. The battery system (300, 400) according to claim 1, wherein the DC/DC converter (320, 420, 520) is configured to provide a fraction of a full power needed by a load (330) connected between the first and third output terminals (Vout1, Vout2) of the battery system (300, 400).

3. The battery system (300, 400) according to any one of claims 1-2, wherein the DC/DC converter (320) is a dual active bridge converter (420).

4. The battery system (300, 400) according to any one of claims 1-2, wherein the DC/DC converter (320, 420, 520) is an inductor-inductor-capacitor resonant converter (520).

5. The battery system (300, 400) according to any one of claims 1-4, wherein the DC/DC converter (320, 420, 520) is any one of a buck DC/DC converter, a boost DC/DC converter, or a DC/DC converter with any type of conversion ratio.

6. The battery system (300, 400) according to any one of claims 1-5, wherein the DC/DC converter (320, 420, 520) is a unidirectional or bidirectional DC/DC converter.

7. The battery system (300, 400) according to any one of claims 1-6, wherein the DC/DC converter (320, 420, 520) is configured to provide galvanic isolation between the input and output of the battery system (300, 400).

8. The battery system (300, 400) according to any one of claims 1-7, wherein the DC/DC converter (320, 420, 520) output voltage is configurable such that the third voltage level (V3) is between the battery pack (310) output voltage and a maximum output voltage of the DC/DC converter (320, 420, 520).

9. The battery system (300, 400) according to any one of claims 1-8, wherein the battery system (300, 400) is implemented in a renewable energy system, or a high-voltage direct current, HVDC, transmission system, or a battery energy storage system.

10. The battery system (300, 400) according to any one of claims 1-8, wherein the battery system (300, 400) is implemented in a motor drive system of a vehicle (700).

11. A vehicle (700) comprising a battery system (300, 400) according to any one of claims 1-8.

12. A method for providing multiple output voltage levels (V1, V2, V3) in a battery system (300, 400) comprising:
providing (601) at least one battery pack (310) having a first terminal (T1) and a second terminal (T2);
providing (602) a direct current to direct current, DC/DC, converter (320, 420, 520) having a first input terminal (In1), a second input terminal (In2), a first output terminal (Out1) and a second output terminal (Out2);
providing (603) a connection between the first input terminal (In1) of the DC/DC converter (320) and the first terminal (T1) of the battery pack (310),
providing (604) a connection between the second input terminal (In2) of the DC/DC converter (320) and the second terminal (T2) of the battery pack (310),
providing (605) a connection between the first output terminal (Out1) of the DC/DC converter (320) and a first output terminal (Vout1) of the battery system (300, 400),
providing (606) a connection between the second output terminal (Out2) of the DC/DC converter (320, 420, 520), the first terminal (T1) of the battery pack (310) and a second output terminal (Vout2) of the battery system (300),
providing (607) a connection between the second terminal (T2) of the battery pack (310) and a third output terminal (Vout3) of the battery system (300, 400); and
providing (608) a first voltage level (V1) between the first and second output terminals (Vout1, Vout2) of the battery system (300, 400), which is the DC/DC converter (320, 420, 520) output voltage level,
providing (609) a second voltage level (V2) between the second and third output terminals (Vout2, Vout3) of the battery system (300, 400), which is the battery pack (310) output voltage level,
providing (610) a third voltage level (V3) between the first and third output terminals (Vout1, Vout3) of the battery system (300, 400), which is a sum of the battery pack (310) output voltage and DC/DC converter (320, 420, 520) output voltage.
